# EUROPÄISCHE PATENTSCHRIFT

(11) **EP 0 419 708 B1**
(45) Veröffentlichungstag und Bekanntmachung des Hinweises auf die Patenterteilung: **30.11.1994**
(21) Anmeldenummer: 89117940.0
(22) Anmeldetag: 28.09.1989
(51) Int. Cl.: H04L 12/40

(54) **Schnittstellenbaustein für eine Busschnittstelle**
Interface module for a bus interface
Module d'interface pour une interface de ligne bus

(43) Veröffentlichungstag der Anmeldung: 03.04.1991
(73) Patentinhaber: SIEMENS AKTIENGESELLSCHAFT, 80333 München (DE)
(72) Erfinder: Flach, Werner, Dipl.-Ing., D-8450 Amberg (DE)

(56) Entgegenhaltungen:
- EP-A- 0 163 361
- ELEKTRONIK. vol. 35, no. 19, 19 September 1986, MUNCHEN DE Seiten 146 - 154; R.WILSON: "HOCHLEISTUNGSNETZE FUER PERIPHERIEGERAETE Aufbau von SCSI- und IPI-Schnittstellen mit RS-485 transceivern "
- ELEKTRONIK. vol. 36, no. 13, 26 Juni 1987, MUNCHEN DE Seiten 86 - 94; A.Djenguerian: "PRAKTISCHER AUFBAU EINES ETHERNET-/CHEAPERNET-ANSCHLUSSKNOTENS"
- IBM TECHNICAL DISCLOSURE BULLETIN. vol. 24, no. 8, Januar 1982, NEW YORK US, Seiten 4041 - 4042; R. KELLER et al.: "LOCAL ATTACHMENT OF A STATION TO A RING NETWORK THROUGH A DISTRIBUTION PANEL AND A COAXIAL CABLE "

## Beschreibung

Die Erfindung betrifft ein Anschlußmittel zum Anschluß eines Teilnehmers eines Kommunikationssystems, z.B. einer speicherprogrammierbaren Steuerung, an einen Zweidraht-Linien-Bus, wobei der Teilnehmer über eine Busschnittstelle verfügt, die zwei Schnittstellenanschlüsse zur Übergabe eines Differenzsignals (RS 485 Schnittstelle, EIA-Norm RS 485, Elektronik 19, 19.09.1986, S. 146-154) aufweist und die mit einem dritten Schnittstellenanschluß zur Spannungsversorgung und mit einem vierten Schnittstellenanschluß zur Masseverbindung versehen ist.

Anschlußmittel der obengenannten Art wurden bisher in die Schaltung eines Teilnehmers integriert. Z.B. werden bei Baugruppen die Anschlußmittel mit in die Entflechtung einbezogen. Doch ist die Verbindung der Anschlußmittel mit dem Zweidraht-Linien-Bus recht umständlich und außerdem die Aufnahme der Anschlußmittel unter Umständen unzweckmäßig oder z.B. aus Platzmangel überhaupt nicht möglich. Weiterhin besteht der Bedarf einer einfachen Schnittstellenvervielfachung.

Daher liegt der Erfindung die Aufgabe zugrunde, anwenderfreundliche Anschlußmittel zu schaffen, die eine einfache Anbindung an eine normierte Busschnittstelle obengenannter Art ermöglichen und eine gute Entstörung sowie einen unverlierbaren Abschluß des Zweidraht-Linien-Busses bieten.

Diese Aufgabe wird durch einen Schnittstellenbaustein mit den Merkmalen nach Anspruch 1 gelöst. Für eine gute Entstörung ist es außerdem vorteilhaft, wenn die Masseanschlußklemme aus einer Metallunterlage und einer Schelle besteht, durch die der Schirm des geschirmten Kabels massiv umfaßbar und gegen die Metallunterlage anpreßbar ist. Zur Heranführung eines Massekabels an den Schnittstellenbaustein ist es günstig, wenn ein zusätzlicher, von außen zugänglicher, fünfter Anschluß vorgesehen ist, der mit der Masseanschlußklemme durch einen Massivleiter verbunden ist. Im Hinblick auf die Konfektionierung des Kabels durch den Kunden erweist es sich als günstig, wenn das eine Ende des mehradrigen Kabels einen mehrpoligen Anschlußstecker zum Anschluß an die Busschnittstelle aufweist und das andere Ende an eine Anschlußeinheit steckbar und über diese mit dem ersten, dem zweiten, dem dritten und dem vierten der vier Anschlüsse sowie mit den ersten Mitteln elektrisch verbunden ist. Eine einfache und vorteilhafte Ausführung ist gegeben, wenn die ersten Mittel als ohmsche Teiler ausgeführt sind, der über das mehradrige Kabel zwischen die beiden Schnittstellenanschlüsse geschaltet ist und an den ersten und den dritten der vier Anschlüsse für den Zweidraht-Linien-Bus leitend anschließbar ist. Hierdurch nämlich wird ein unverlierbarer Abschluß des Zweidraht-Linien-Busses geschaffen. Um die elektrische Verbindung leicht öffnen und schließen zu können, ist es vorteilhaft, wenn der ohmsche Teiler über Schalter an den ersten und den dritten der vier Anschlüsse für den Zweidraht-Linien-Bus leitend anschließbar ist. Eine für den Kunden einfache Handhabung ist dadurch gegeben, wenn die Zuschaltung der ersten und zweiten Mittel mit einem Schraubendreher außerhalb des Gehäuses durchführbar ist. Ist eine zweite Anschlußeinheit mit der ersten Anschlußeinheit gleichen Wirkverbindungen vorgesehen, so ist hierüber der Anschluß eines weiteren Teilnehmers möglich.

In der Zeichnung ist ein Ausführungsbeispiel dargestellt, das im folgenden näher erläutert wird.

Es zeigen:
- FIG 1: eine normierte Busschnittstelle und einen daran angepaßten Schnittstellenbaustein.
- FIG 2: die elektrische Schaltung des Schnittstellenbausteins nach FIG 1,
- FIG 3: die konstruktive Gestaltung des Schnittstellenbausteins nach FIG 1 und FIG 2.

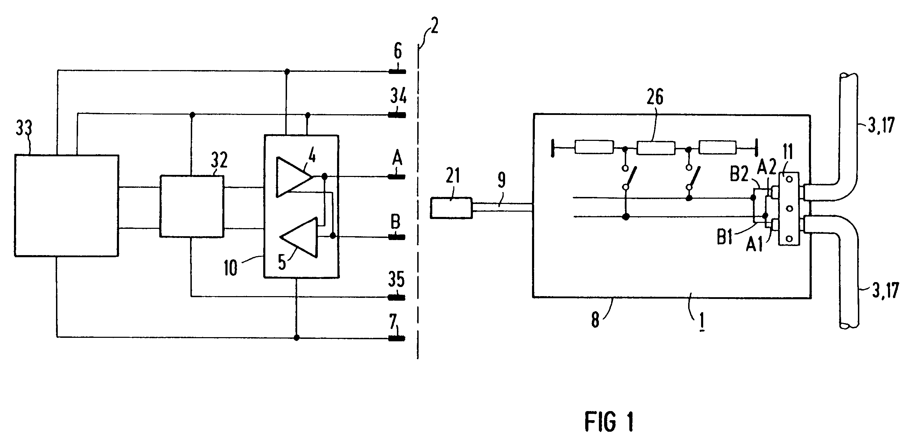

In FIG 1 ist eine normierte Busschnittstelle 2 eines Teilnehmers in einem Kommunikationssystem und ein an diese normierte Busschnittstelle 2 angepaßter Schnittstellenbaustein 1 dargestellt. Der Teilnehmer ist hier durch einen Mikroprozessor (33) angedeutet; der Signalaustausch zwischen der normierten Busschnittstelle 2 und einem Zweidraht-Linien-Bus 3 geschieht mit einem Differenzsignal über zwei Schnittstellenanschlüsse A und 8, die zum Senden und Empfangen des Differenzsignals an einen Verstärkerbaustein 10 (Treiber) mit einem Sender 4 und einem Empfänger 5 angeschlossen sind. Daneben enthält die Busschnittstelle 2 einen dritten Schnittstellenanschluß 6 zur Spannungsversorgung, die vom Teilnehmer zur Verfügung gestellt wird und den Verstärkerbaustein 10 versorgt. Außerdem steht der Verstärkerbaustein 10 mit einem vierten Schnittstellenanschluß 7, an den die Masse des Teilnehmers herangeführt ist, in Verbindung.

Bei der Verwendung der MODEM-Technik, wie bei der vorliegenden Ausführungsform, ist ein entsprechender anwenderspezifischer Schaltkreis 32 für die MODEM-Technik vorgesehen, über den die Signale zwischen dem Sender 4 und dem Empfänger 5 einerseits und dem Mikroprozessor 33 andererseits übertragen werden. Als Zusatz erfordert die MODEM-Technik einen weiteren Schnittstellenanschluß 34 zur Übertragung des RTS (Request to Send)-Signals und einen Schnittstellenanschluß 35 für die Silence-Erkennung. Beide Schnittstellenanschlüsse 34, 35 sind an den anwenderspezifischen Schaltkreis 32 angeschlossen und stehen mit dem Mikroprozessor 33 elektrisch in Verbindung. Es gibt jedoch auch Anwendungsfälle ohne MODEM-Technik, bei denen die entsprechenden Anschlüsse am Schnittstellenbaustein 1 zu den Schnittstellenanschlüssen 34, 35 verzichtbar sind. Der Schnittstellenbaustein 1 weist ein Gehäuse 8 auf, an dem einerseits ein Zweidraht-Linien-Bus 3, hier durch ein geschirmtes Kabel 17 verwirklicht, und andererseits ein mehradriges Kabel 9 mit einem mehrpoligen Anschlußstecker 21 angeschlossen ist. Zum Anschluß des Schnittstellenbausteins 1 an den Zweidraht-Linien-Bus 3 wird das geschirmte Kabel 17 aufgetrennt.

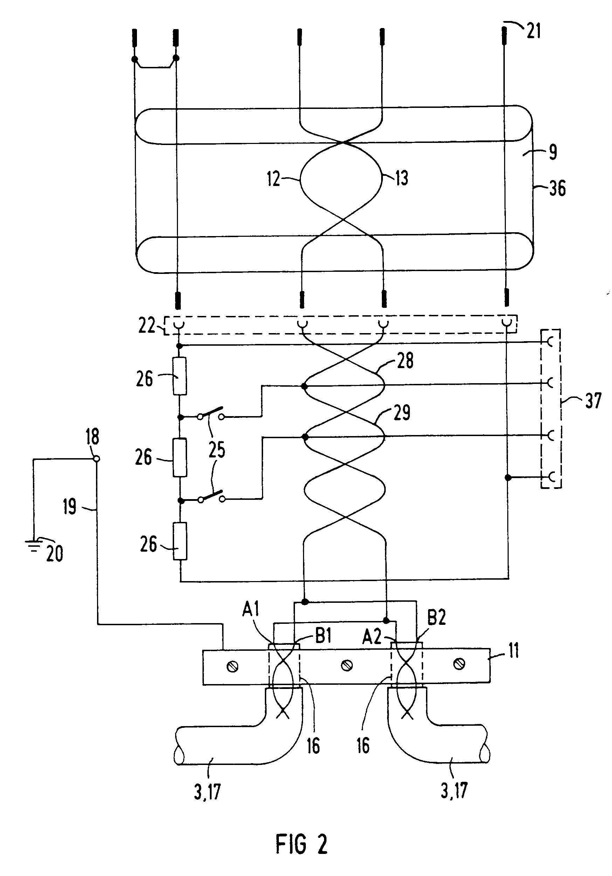

FIG 2 zeigt Einzelheiten der elektrischen Schaltung des Schnittstellenbausteins 1. Der Schirm 16 der beiden nach der Auftrennung entstandenen Enden des geschirmten Kabels 17 ist an einer Masseanschlußklemme 11 angeklemmt, welche mit der Ortserde 20 durch einen Massivleiter 19 verbunden ist. Besonders hervorzuheben ist hierbei, daß die Massenanschlußklemme 11 außen am Gehäuse 8 liegt und hierdurch eine einfache Schirmung des Kabels 17 gewährleistet ist. Vier Anschlüsse A1, A2, B1 und B2 stehen zum Anschluß der Signalleitungen an den beiden Enden des geschirmten Kabels 17 zur Verfügung, wobei jeweils zwei Anschlüsse A1, A2 einerseits und B1, B2 andererseits elektrisch miteinander verbunden sind. Die vier Anschlüsse A1, A2, B1, B2 sind über zwei Leitungen 28 und 29 mit zwei Anschlußeinheiten 22, 37 elektrisch verbunden, an die jeweils über das hier nur einmal dargestellte mehradrige Kabel 9 ein Teilnehmer anschließbar ist. Das mehradrige Kabel 9 weist zu Entstörzwecken einen Schirm 36 auf. Zwei Adern 12, 13 des mehradrigen Kabels 9 sind über den mehrpoligen Anschlußstecker 21 an die Schnittstellenanschlüsse A und B angeschlossen. Zwischen zwei Anschlüssen der Anschlußeinheit 22 ist ein ohmscher Teiler 26, bestehend aus drei ohmschen Widerständen, geschaltet, wobei an jeweils einen Verbindungspunkt zwischen zwei Widerständen ein Schalter 25 liegt. Die anderen Zuleitungen der Schalter 25 sind jeweils mit einer der beiden Leitungen 28 und 29 verbunden. Auf die Anschlußeinheit 22 ist das mehradrige Kabel 9 mit seinen beiden Adern 12 und 13, über die das eigentliche Signal geführt wird, steckbar. Das mehradrige Kabel 9 schafft ebenfalls eine Verbindung des Schnittstellenanschlusses 6 mit der Spannungsversorgung und des Schnittstellenanschlusses 7 zur Masseanbindung einerseits zu der Teilerschaltung 26 andererseits. Mit der Teilerschaltung 26 wird einerseits die Vorverzerrung des Zweidraht-Linien-Busses 3, d.h. seine Ruhelage hergestellt und andererseits der Abschluß des Zweidraht-Linien-Busses 3 erreicht, der hier zudem im Schnittstellenbaustein 1 unverlierbar untergebracht ist.

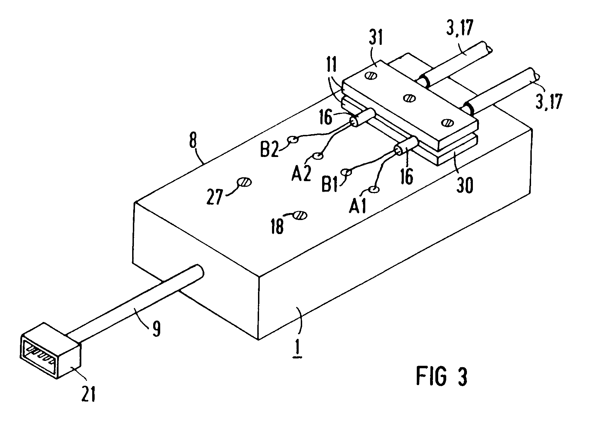

FIG 3 zeigt die konstruktive Gestaltung des Schnittstellenbausteins 1. Er besteht aus einem Gehäuse 8, auf dessen Oberseite eine Masseanschlußklemme 1, bestehend aus einer Metallunterlage 30 und einer Schelle 31, angebracht ist, sowie vier benachbart angeordnete Anschlüsse A1, B1, A2, B2 vorgesehen sind. Weiterhin sind ein Anschluß 18, der über einen hier nicht dargestellten Massivleiter 19 mit der Masseanschlußklemme 11 verbunden ist, und eine Schraube 27 vorgesehen. Mit einem Schraubendreher können die beiden Schalter 25 über die Schraube 27 betätigt werden, um somit die Teilerschaltung 26 ein- oder auszuschalten. Hierdurch werden der Abschluß und die Ruhelage des Zweidraht-Linien-Busses 3 bewirkt. Zum Schnittstellenbaustein 1 gehört außerdem das mehradrige Kabel 9 mit dem mehrpoligen Anschlußstecker 21 an dem einen Ende zum Anschluß an die normierte Busschnittstelle 2 und mit einem hier nicht dargestellten, mehrpoligen Anschlußstecker am anderen Ende, über den die elektrische Verbindung mit der Anschlußeinheit 22 (siehe FIG 2) möglich ist. Die massive Ausbildung der Masseanschlußklemme 11 ermöglicht eine gute Masseanbindung des geschirmten Kabels 17. Über den Anschluß 18 kann ein Massekabel zur Erdung herangeführt werden, sofern beispielsweise eine Ortserde 20, die direkt mit dem Gehäuse 8 in Verbindung steht, nicht vorhanden ist. Das Gehäuse 8 ist über einen hier nicht dargestellten, rückseitigen Schnappmechanismus zur Halterung auf eine Schiene aufschnappbar, wobei eine mit der Masseanschlußklemme 11 in Verbindung stehende Massefeder die über die Schiene herangeführte Ortserde kontaktiert.

## Patentansprüche

1. Schnittstellenbaustein (1) als Bindeglied zwischen einer Busschnittstelle (2) eines Teilnehmers eines Kommunikationssystems und einem Zweidraht-Linien-Bus (3), wobei die Busschnittstelle (2) zwei Schnittstellenanschlüsse (A, B) zur Übergabe eines Differenzsignals aufweist und mit einem dritten Schnittstellenanschluß (6) zur Spannungsversorgung und mit einem vierten Schnittstellenanschluß (7) zur Masseverbindung versehen ist **dadurch gekennzeichnet,** daß der Schnittstellenbaustein (1) ein Gehäuse (8) aufweist, das mit einer Masseanschlußklemme (11), vier Anschlüssen (A1, A2,B1,B2) zum Anschluß des durch ein geschirmtes Kabel (17) realisierten Zweidraht-Linien-Busses und mit ersten Mitteln (26) zur Einstellung der Ruhelage des Zweidraht-Linien-Busses und mit wahlweise zuschaltbaren zweiten Mitteln (26) zum Abschluß des Zweidraht-Linien-Busses sowie mit einem mehradrigen Kabel (9) versehen ist, wobei der erste (A1) und der zweite (A2) der vier Anschlüsse einerseits und der dritte (B1) und der vierte (B2) der vier Anschlüsse andererseits elektrisch miteinander verbunden sind und eine elektrische Verbindung zwischen dem ersten (A1) der vier Anschlüsse und einer ersten Ader (12) des mehradrigen Kabels (9) sowie dem dritten (B1) der vier Anschlüsse und einer zweiten Ader (13) des mehradrigen Kabels (9) besteht.

2. Schnittstellenbaustein nach Anspruch 1, **dadurch gekennzeichnet**, daß die Masseanschlußklemme (11) aus einer Metallunterlage (30) und einer Schelle (31) besteht, durch die der Schirm (16) des geschirmten Kabels (17) massiv umfaßbar und gegen die Metallunterlage (30) anpreßbar ist.

3. Schnittstellenbaustein nach Anspruch 1 oder 2, **dadurch gekennzeichnet**, daß ein zusätzlicher, von außen zugänglicher fünfter Anschluß (18) vorgesehen ist, der mit der Masseanschlußklemme (11) durch einen Massivleiter (19) verbunden ist.

4. Schnittstellenbaustein nach einem der vorgenannten Ansprüche, **dadurch gekennzeichnet**, daß an dem einen Ende des mehradrigen Kabels (9) ein mehrpoliger Anschlußstecker (21) zum Anschluß an die Busschnittstelle (2) vorgesehen ist und daß das andere Ende an eine erste Anschlußeinheit (22) steckbar und über diese mit dem ersten (A1), dem zweiten (A2), dem dritten (B1) und dem vierten (B2) der vier Anschlüsse sowie mit den ersten Mitteln (26) elektrisch verbunden ist.

5. Schnittstellenbaustein nach einem der vorgenannten Ansprüche, **dadurch gekennzeichnet,** daß die ersten Mittel als ohmscher Teiler (26) ausgeführt sind, der über das mehradrige Kabel (9) zwischen die beiden Schnittstellenanschlüsse (A, B) geschaltet ist und an den ersten (A1) und den dritten (B1) der vier Anschlüsse für den Zweidraht-Linien-Bus (3) leitend anschließbar ist.

6. Schnittstellenbaustein nach Anspruch 6, **dadurch gekennzeichnet**, daß der ohmsche Teiler (26) über Schalter (25) an den ersten (A1) und den dritten (B1) der vier Anschlüsse für den Zweidraht-Linien-Bus (3) leitend anschließbar ist.

7. Schnittstellenbaustein nach einem der vorhergehenden Ansprüche, **dadurch gekennzeichnet,** daß die Zuschaltung der zweiten Mittel (26) außerhalb des Gehäuses (8) durchführbar ist.

8. Schnittstellenbaustein nach einem der vorhergehenden Ansprüche, **dadurch gekennzeichnet,** daß die Zuschaltung der ersten Mittel (26) außerhalb des Gehäuses (8) durchführbar ist.

9. Schnittstellenbaustein nach einem der vorhergehenden Ansprüche, daß eine zweite Anschlußeinheit (37) mit der ersten Anschlußeinheit (22) gleichen Wirkverbindungen vorgesehen ist.

## Claims

1. Interface chip (1) as a connecting link between a bus interface (2) of a station of a communications system and a two-wire line bus (3), the bus interface (2) having two interface terminals (A, B) for transferring a differential signal and being provided with a third interface terminal (6) for supplying power and with a fourth interface terminal (7) for the connection to ground, characterized in that the interface chip (1) has a housing (8) which is provided with a ground terminal clip (11), four terminals (A1, A2, B1, B2) for the connection of the two-wire line bus in the form of a shielded cable (17) and with first means (26) for adjusting the neutral position of the two-wire line bus and with optionally connectable second means (26) for terminating the two-wire line bus as well as with a multi-core cable (9), the first (A1) and the second (A2) of the four terminals, on the one hand, and the third (B1) and the fourth (B2) of the four terminals, on the other hand, being electrically connected to one another and there being an electrical connection between the first (A1) of the four terminals and a first core (12) of the multi-core cable (9) as well as between the third (B1) of the four terminals and a second core (13) of the multi-core cable (9).

2. Interface chip according to claim 1, characterized in that the ground terminal clip (11) comprises a metal base (30) and a clamp (31), by means of which the shield (16) of the shielded cable (17) may be solidly embraced and pressed against the metal base (30).

3. Interface chip according to claim 1 or 2, characterized in that an additional fifth terminal (18) which is accessible from outside is provided, which is connected to the ground terminal clip (11) by a solid conductor (19).

4. Interface chip according to one of the preceding claims, characterized in that a multipole connector (21) for connection to the bus interface (2) is provided at one end of the multi-core cable (9) and that the other end may be plugged into a first terminal unit (22) and is electrically connected via said unit to the first (A1), the second (A2), the third (B1) and the fourth (B2) of the four terminals as well as to the first means (26).

5. Interface chip according to one of the preceding claims, characterized in that the first means take the form of a resistor divider (26), which is connected via the multi-core cable (9) between the two interface terminals (A, B) and may be conductively connected to the first (A1) and the third (B1) of the four terminals for the two-wire line bus (3).

6. Interface chip according to claim 6, characterized in that the resistor divider (26) may be conductively connected via switches (25) to the first (A1) and the third (B1) of the four terminals for the two-wire line bus (3).

7. Interface chip according to one of the preceding claims, characterized in that the connection to system of the second means (26) may be effected outside of the housing (8).

8. Interface chip according to one of the preceding claims, characterized in that the connection to system of the first means (26) may be effected outside of the housing (8).

9. Interface chip according to one of the preceding claims, characterized in that a second terminal unit (37) having identical operational connections to the first terminal unit (22) is provided.

## Revendications

1. Module d'interface (1) réalisé sous la forme d'un élément de liaison entre une interface de bus (2) d'un abonné d'un système de communication et un bus (3) de ligne bifilaire, l'interface de bus (2) comportant deux bornes d'interface (A,B) pour le transfert d'un signal de différence et comportant une troisième borne d'interface (6) pour l'alimentation en tension et une quatrième borne d'interface (7) pour le raccordement à la masse, caractérisé par le fait que le module d'interface (1) possède un boîtier (8) qui comporte une borne de raccordement à la masse (11), quatre bornes (A1,A2,B1,B2) pour le raccordement du bus de ligne bifilaire, constitué par câble blindé (17), et des premiers moyens (26) pour régler la position de repos du bus de lignp bifilaire, et des seconds moyens (26) pouvant être raccordés au choix, pour le raccordement du bus de ligne bifilaire, ainsi qu'un câble (9) à plusieurs conducteurs, la première (A1) et la seconde (A2) des quatre bornes, d'une part, et la troisième (B1) et la quatrième (B2) des quatre bornes, d'autre part, étant reliées électriquement entre elles, tandis qu'une liaison électrique est établie entre la première (A1) des quatre bornes et un premier conducteur (12) du câble (9) à plusieurs conducteurs ainsi qu'entre la troisième (B1) des quatre bornes et un second conducteur (13) du câble (9) à plusieurs conducteurs.

2. Module d'interface suivant la revendication 1, caractérisé par le fait que la borne de raccordement à la masse (11) est constituée par une sous-couche métallique (30) et une coque (31), qui peut entourer massivement le blindage (16) du câble blindé (17) et peut être repoussée contre la sous-couche métallique (30).

3. Module d'interface suivant la revendication 1 ou 2, caractérisé par le fait qu'il est prévu une cinquième borne supplémentaire (18) accessible de l'extérieur et qui est reliée à la borne de raccordement à la masse (11) par l'intermédiaire d'un conducteur massif (19).

4. Module d'interface suivant l'une des revendications précédentes, caractérisé par le fait qu'un connecteur multipolaire (21) pour le raccordement à l'interface de bus (2) est prévu sur une extrémité du câble (9) à plusieurs conducteurs et que l'autre extrémité peut être enfichée sur une première unité de raccordement (22) et est reliée électriquement, par l'intermédiaire de cette dernière, à la première (A1), à la seconde (A2), à la troisième (B1) et à la quatrième (B2) des quatre bornes ainsi qu'aux premiers moyens (26).

5. Module d'interface suivant l'une des revendications précédentes, caractérisé par le fait que les premiers moyens sont réalisés sous la forme d'un diviseur ohmique (26), qui est branché, par l'intermédiaire d'un câble (9), à plusieurs conducteurs, entre les deux bornes d'interface (A,B), et peut être raccordé de façon conductrice à la première (A1) et à la troisième (B1) des quatre bornes pour le bus formé de ligne bifilaire (3).

6. Module d'interface suivant la revendication 6, caractérisé par le fait que le diviseur ohmique (26) peut être raccordé de façon conductrice au moyen d'interrupteurs (25) à la première (A1) et à la troisième (B1) des quatre bornes pour le bus (3) de ligne bifilaire.

7. Module d'interface suivant l'une des revendications précédentes, caractérisé par le fait que le raccordement supplémentaire des seconds moyens (26), peut être exécuté à l'extérieur du boîtier (8).

8. Module d'interface suivant l'une des revendications précédentes, caractérisé par le fait que le raccordement supplémentaire des premiers moyens (26) peut être réalisé à l'extérieur du boîtier (8).

9. Module d'interface suivant l'une des revendications précédentes, caractérisé par le fait qu'il est prévu une seconde unité de raccordement (37) comportant des liaisons actives identiques à celles de la première unité de raccordement (22).
